# EUROPÄISCHE PATENTSCHRIFT

(11) **EP 2 246 661 B1**
(45) Veröffentlichungstag und Bekanntmachung des Hinweises auf die Patenterteilung: **25.02.2015**
(21) Anmeldenummer: 10158909.1
(22) Anmeldetag: 01.04.2010
(51) Int. Cl.: G01C 15/00

(54) **Lasergerät mit einer justierbaren Pendeleinrichtung**
Laser device with an adjustable pendulum device
Appareil à laser doté d'un dispositif oscillant ajustable

(30) Priorität: 30.04.2009 DE 102009002771
(43) Veröffentlichungstag der Anmeldung: 03.11.2010
(73) Patentinhaber: HILTI Aktiengesellschaft, 9494 Schaan (LI)
(72) Erfinder: Steffen, Roman, 9445, Rebstein (CH); Juesten, Detlef, 9467, Frümsen (CH)
(74) Vertreter: Hilti Aktiengesellschaft Corporate Intellectual Property

(56) Entgegenhaltungen:
- DE-A1- 10 217 108
- DE-A1-102006 055 385
- DE-U1-202007 007 193
- JP-A- 2009 085 909

## Beschreibung

Die vorliegende Erfindung betrifft ein Lasergerät mit einer Pendellaservorrichtung bestehend aus einem Kardangelenk mit einer ersten und zweiten Achse und einer, an dem Kardangelenk angeordneten Strahleinrichtung, wobei die Strahleinrichtung einen Pendelkörper aufweist, der mittels des Kardangelenkes unabhängig von einer Ausrichtung des Lasergerätes an einer vertikalen Richtung selbstnivellierend ausgebildet ist, und wobei die erste und zweite Achse des Kardangelenkes in vertikaler Richtung versetzt zueinander angeordnet und mittels eines Kopplungselementes gekoppelt sind.

Um Nivellier- oder Markierungsarbeiten im Innen- und Außenbau durchzuführen, sind Lasergeräte bekannt, die punkt- und/oder linienförmige Laserstrahlen erzeugen. Diese Laserstrahlen dienen dazu, Referenzpunkte und/oder Referenzlinien auf Wände, Decken oder Böden zu übertragen. Bei diesen Lasergeräten wird zwischen Rotationslasem sowie Punkt- und/oder Linienlasern unterschieden. Rotationslaser erzeugen einen linienförmigen Laserstrahl durch Rotation einer Laserstrahlquelle oder einer strahlumlenkenden Optik um eine Rotationsachse. Punkt- und/oder Linienlaser erzeugen Laserstrahlen durch strahlformende Optiken, wie Zylinderlinsen oder Prismen. Punkt- und/oder Linienlaser sind häufig In einem begrenzten Winkelbereich, dem Selbstnivellierbereich, selbstnivellierend ausgebildet. Dazu ist eine Strahleinrichtung an einer, als Kardangelenk ausgebildeten, Pendeleinrichtung aufgehängt. Die Strahleinrichtung richtet sich innerhalb des Selbstnivellierbereiches im Gravitationsfeld der Erde unabhängig von einer Ausrichtung des Lasergerätes an einer vertikalen Richtung selbst aus, so dass die Laserstrahlen exakt in horizontaler oder vertikaler Richtung ausgerichtet sind. Die beschriebene Pendeleinrichtung bildet die Grundfunktion der eingangs genannten selbstnivellierenden Lasergeräte.

Aufgrund von Fertigungstoleranzen bei der Herstellung und beim Zusammenbau der Pendel- und Strahleinrichtungen kann der Schwerpunkt der Pendellaservorrichtung in der horizontalen Ebene verschoben sein. Um die Funktionalität des Lasergerätes im Selbstnivellierbereich gewährleisten zu können, muss der Schwerpunkt der Pendellaservorrichtung möglichst genau ausgerichtet sein. Dies kann einerseits durch geringe Toleranzen bei der Fertigung und Montage erreicht werden, was allerdings zu hohe Kosten verursacht. Andererseits kann der Schwerpunkt der Pendellaservorrichtung nach dem Zusammenbau verschoben werden. Bekannt ist, den Schwerpunkt von Pendellaservorrichtungen mit Hilfe von Gewichtselementen anzupassen. Dieses Vorgehen führt dazu, dass bei der Justage des Lasergerätes eine Vielzahl an Gewichtselementen vorgehalten werden muss, um das passende Gewichtselement in das Lasergerät einbauen zu können.

Aus DE 20 2007 007 193 ist ein Lasergerät mit einer Strahleinrichtung, die mittels einer Pendeleinrichtung an einer vertikalen Richtung selbstnivellierend ausgebildet ist, bekannt. Die Pendeleinrichtung ist als Kardangelenk mit einer ersten und zweiten Achse ausgebildet, wobei die Achsen senkrecht zueinander verlaufen und in der vertikalen Richtung versetzt zueinander angeordnet sind. Die Justierung des Schwerpunktes der Pendeleinrichtung erfolgt über zwei Einstellschrauben, die an dem Pendelkörper vorgesehen sind.

JP 2009 085909 offenbart ein Lasergerät mit einer Strahleinrichtung, die mittels einer Pendeleinrichtung selbstnivellierend ausgebildet ist. Die Pendeleinrichtung ist als zweiachsiges Kardangelenk mit senkrechten Achsen ausgebildet, die in einer gemeinsamen Ebene verlaufen. Der Schwerpunkt der Pendeleinrichtung wird durch eine Verschiebung der Strahleinrichtung entlang einer der Achsen verstellt. Nachteilig ist, dass die Achsabschnitte der sich schneidenden Achsen jeweils einzeln justiert werden müssen.

Die Aufgabe der vorliegenden Erfindung besteht demgegenüber darin, das bekannte Lasergerät dahingehend weiterzuentwickeln, dass die Einstellung des Schwerpunktes der Pendellaservorrichtung vereinfacht wird.

Diese Aufgabe wird bei dem eingangs genannten Lasergerät erfindungsgemäß dadurch gelöst, dass der Pendelkörper der Strahleinrichtung auf zumindest einer der beiden Achsen des Kardangelenkes verschiebbar gelagert ist. Die Verschiebung des Pendelkörpers entlang zumindest einer der beiden Achsen des Kardangelenkes führt zu einer Drehung des Pendelkörpers um die Achse und damit zu einer Veränderung des Schwerpunktes. Dadurch, dass die erste und zweite Achse in der vertikalen Richtung versetzt angeordnet sind, bilden die beiden Achsen keinen Schnittpunkt. Die Anordnung der ersten und zweiten Achse ohne Schnittpunkt bietet den Vorteil, dass beide Achsen des Kardangelenkes jeweils von einer Seite justierbar sind. Ein zweiachsiges Kardangelenk mit sich schneidenden Achsen besteht aus vier Achsabschnitten, die jeweils einzeln justiert werden müssen.

Besonders bevorzugt weist die verschiebbar ausgebildete Achse eine Längsachse und eine Hülse auf, die mittels einer Lagereinheit gekoppelt sind. Die Hülse steht besonders bevorzugt mittels einer formschlüssigen Verbindung mit dem Pendelkörper der Strahleinrichtung in Eingriff.

In einer bevorzugten Ausführungsform ist die Längsachse mittels einer Feststelleinheit verdrehsicher mit dem Kopplungselement des Kardangelenkes gekoppelt. Besonders bevorzugt weist die Hülse an dem der Feststelleinheit abgewandten Ende der verschiebbar ausgebildeten Achse ein Feingewinde auf, wobei das Feingewinde besonders bevorzugt auf der der Strahleinrichtung zugewandten Seite der Pendellaservorrichtung angeordnet ist.

Besonders bevorzugt ist das Kopplungselement zwischen der ersten und zweiten Achse des Kardangelenkes als U-förmiges Halteprofil ausgebildet.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: ein erfindungsgemäßes Lasergerät bestehend aus einer Pendellaservorrichtung mit einer Strahleinrichtung, die an einer Pendeleinrichtung gelagert ist, in einem Längsschnitt;
- Fig. 2: den Aufbau der Pendeleinrichtung der in Fig. 1 dargestellten Pendellaservorrichtung mit einer Querachseinheit, einer Längsachseinheit und einem Halteprofil in einer dreidimensionalen Darstellung; und
- Fig. 3: den Aufbau der Längsachseinheit in einer vergrößerten Darstellung in einem Längsschnitt.

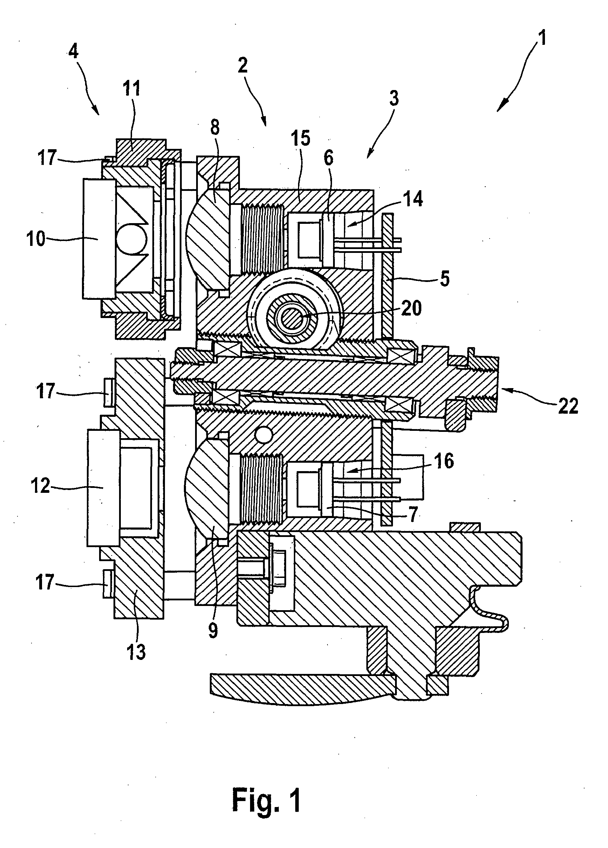

Das in **Fig. 1** in einem Längsschnitt schematisch dargestellte Lasergerät **1** umfasst ein Gehäuse (nicht gezeigt), eine in dem Gehäuse angeordnete Pendellaservorrichtung **2** bestehend aus einer Pendeleinrichtung **3** und einer an der Pendeleinrichtung **3** angeordneten Strahleinrichtung **4** sowie eine Elektronik-Platine **5** zur Steuerung der Strahleinrichtung 3.

Die Strahleinrichtung 4 umfasst eine erste und zweite Strahlquelle **6, 7,** die bspw. als Laserdioden mit einer Wellenlänge von 635 nm ausgebildet sind. In Laserdioden erzeugte Laserstrahlung ist stark divergierend und wird daher mit Hilfe von Kollimationsoptiken parallelisiert. Ein aus der ersten Strahlquelle 6 austretender erster Laserstrahl trifft auf eine erste Kollimationsoptik **8** und ein aus der zweiten Strahlquelle 7 austretender zweiter Laserstrahl trifft auf eine zweite Kollimationsoptik **9.** Der kollimierte, erste Laserstrahl trifft auf eine erste Strahlformungsoptik **10,** die in einer ersten Optikhalterung **11** befestigt ist. Der kollimierte, zweite Laserstrahl trifft auf eine zweite Strahlformungsoptik **12,** die in einer zweiten Optikhalterung **13** befestigt ist.

Die erste Strahlquelle 6 und die erste Kollimationsoptik 8 sind in einer ersten Bohrung **14** eines Pendelkörpers **15** angeordnet. Die zweite Strahlquelle 7 und die zweite Kollimationsoptik 9 sind in einer zweiten Bohrung **16** des Pendelkörpers 15 angeordnet. Die erste und zweite Bohrung 14, 16 durchdringen den Pendelkörper 15 vollständig. Der Pendelkörper 15 besteht bspw. aus Aluminium und die Bohrungen 14, 16 können durch Fräsen in eine Aluminiumplatte oder einen Aluminiumblock eingebracht werden. Die erste und zweite Strahlquelle 6, 7 sind an einem Ende in die Bohrungen 14, 16 des Pendelkörpers 15 eingepresst. An einem gegenüber liegenden Ende der Bohrungen 14, 16 sind die Kollimationsoptiken 8, 9 angebracht. Der Pendelkörper 15 ist über jeweils drei Passstifte **17,** die in entsprechende Bohrungen der Optikhalterungen 11, 13 eingreifen, mit der ersten und zweiten Optikhalterung 11, 13 reibkraftschlüssig verbunden.

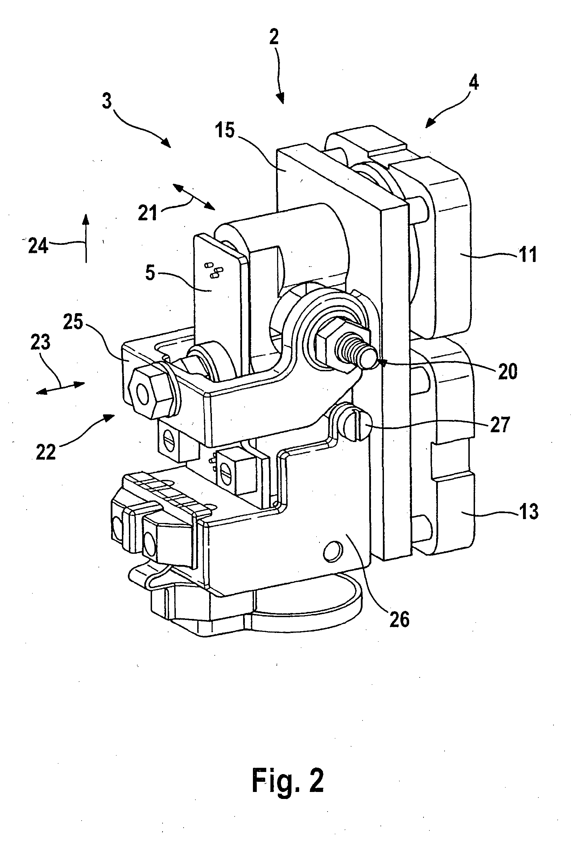

**Fig. 2** zeigt den Aufbau der Pendeleinrichtung 3 der erfindungsgemäßen Pendellaservorrichtung 2 der Fig. 1 in einer dreidimensionalen Ansicht.

Die Strahleinrichtung 4 ist über die Pendeleinrichtung 3, die als zweiachsiges Kardangelenk mit einer ersten Achseinheit **20,** die entlang einer Querrichtung (Pfeil **21**) ausgerichtet ist und als Querachseinheit bezeichnet wird, und mit einer von der ersten Achse 20 verschiedenen zweiten Achse **22,** die entlang einer Längsrichtung (Pfeil **23**) ausgerichtet ist und als Längsachseinheit bezeichnet wird, im Schwerefeld der Erde selbstnivellierend gelagert, d.h. der Pendelkörper 15 wird über die erste und zweite Achse 20, 22 am Lot parallel zu einer vertikalen Richtung **24** ausgerichtet. Die erste und zweite Achse 20, 22 sind in vertikaler Richtung versetzt angeordnet, so dass sie keinen Schnittpunkt bilden. Die Anordnung der ersten und zweiten Achse 20, 22 ohne Schnittpunkt bietet den Vorteil, dass die beiden Achsen 20, 22 des Kardangelenkes jeweils von einer Seite justierbar sind. Ein zweiachsiges Kardangelenk mit sich schneidenden Achsen besteht aus vier Achsabschnitten, die einzeln justiert werden müssen.

Die Kopplung der Querachseinheit 20 und der Längsachseinheit 22 erfolgt über ein Kopplungselement **25** in Form eines U-förmigen Halteprofils. Das Halteprofil 25 ist an einem ersten und zweiten Ende der U-Form mit Bohrungen versehen, die mit der Querachseinheit 20 in Eingriff stehen. In der Mitte der U-Form weist das Halteprofil 25 eine weitere Bohrung auf, die mit der Längsachseinheit 22 in Eingriff steht.

Die Pendeleinrichtung 3 weist neben der Querachseinheit 20, der Längsachseinheit 22 und dem Halteprofil 25 ein Gewichtselement **26** auf, das mit dem Pendelkörper 15 verbunden und in Querrichtung 21 über eine Verstelleinrichtung **27** in Form einer Schraube verschiebbar ausgebildet ist. Durch eine Verschiebung des Gewichtselementes 26 ist der Schwerpunkt der Pendellaservorrichtung 2 in der Querrichtung 20 einstellbar.

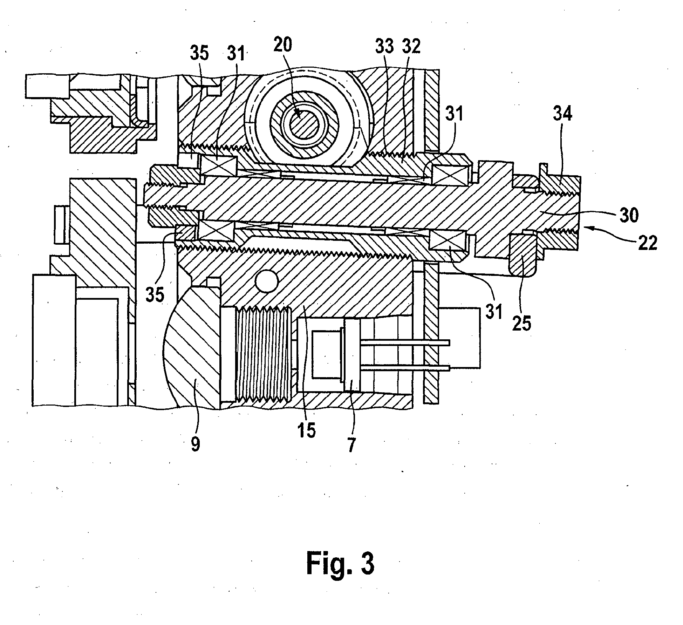

Die Einstellung und Verschiebung des Schwerpunktes der Pendellaservorrichtung 2 in Längsrichtung 21 erfolgt ohne ein zusätzliches Gewichtselement, wie anhand von Fig. 3 erläutert wird. **Fig. 3** zeigt einen Ausschnitt aus Fig. 1 mit der Längsachseinheit 22 in einer vergrößerten Darstellung.

Die Längsachseinheit 22 besteht aus einer Achse **30,** die im Folgenden als Längsachse bezeichnet wird, einer Lagereinheit **31** und einer Hülse **32.** Der Pendelkörper 15, der sich über die Längsachseinheit 22 in Längsrichtung 23 ausrichtet, verfügt über eine Bohrung, die den Pendelkörper 15 vollständig durchdringt und die Längsachseinheit 22 aufnimmt.

Die Hülse 32 ist in dem Pendelkörper 15 verschiebbar gelagert. Der Pendelkörper 15 und die Hülse 32 stehen über eine formschlüssige Verbindung **33** in Form eines Gewindes in Eingriff. Die Hülse 32 verfügt an ihrer Außenseite über ein Außengewinde, das in ein entsprechend ausgebildetes Innengewinde in der Bohrung des Pendelkörpers 15 eingreift.

Die Längsachse 31 ist im Inneren der Hülse 32 angeordnet und über die Lagereinheit 31 mit der Hülse 32 gekoppelt. An einem Ende ist die Längsachse 30 mittels einer Feststelleinheit **34** in Form einer Mutter mit dem Halteprofil 25 verdrehsicher gekoppelt. Die Längsachse 31 kann relativ zum Halteprofil 25 nicht verschoben oder verdreht werden.

Die Hülse 32 weist an dem der Feststelleinheit 34 abgewandten Ende der Längsachseinheit 22 ein Feingewinde **35** auf, über das die Hülse 32 durch Drehung in Längsrichtung 23 verstellbar ist. Durch die Drehbewegung der Hülse 32 um die Längsrichtung 23 wird der Pendelkörper 15 mit der Strahleinrichtung 4 in Längsrichtung 21 verstellt. Da die Längsachseinheit 22 über das Halteprofil 25 mit der Querachseinheit 20 gekoppelt ist, führt eine Verschiebung des Pendelkörpers 15 in Längsrichtung 23 zu einer Drehung des Pendelkörpers 15 um die Längsrichtung 23.

## Patentansprüche

1. Lasergerät (1) mit einer Pendellaservorrichtung (2) bestehend aus einem Kardangelenk (3) mit einer ersten und zweiten Achse (20, 22) und einer an dem Kardangelenk (3) angeordneten Strahleinrichtung (4), wobei die Strahleinrichtung (4) einen Pendelkörper (15) aufweist, der mittels des Kardangelenkes (3) unabhängig von einer Ausrichtung des Lasergerätes (1) an einer vertikalen Richtung (24) selbstnivellierend ausgebildet ist, wobei die erste und zweite Achse (20, 22) des Kardangelenkes (3) in vertikaler Richtung (24) versetzt zueinander angeordnet und mittels eines Kopplungselementes (25) gekoppelt sind,
**dadurch gekennzeichnet, dass** der Pendelkörper (15) der Strahleinrichtung (4) auf zumindest einer der Achsen (22) des Kardangelenkes (3) verschiebbar gelagert ist.

2. Lasergerät nach Anspruch 1, **dadurch gekennzeichnet, dass** die Achse (22), auf der der Pendelkörper verschiebbar gelagert ist, eine Längsachse (30) und eine Hülse (32) aufweist, die mittels einer Lagereinheit (31) gekoppelt sind.

3. Lasergerät nach Anspruch 2, **dadurch gekennzeichnet, dass** die Hülse (32) mittels einer formschlüssigen Verbindung (33) mit dem Pendelkörper (15) der Strahleinrichtung (4) in Eingriff steht.

4. Lasergerät nach einem der Ansprüche 2 bis 3, **dadurch gekennzeichnet, dass** die Längsachse (30) mittels einer Feststelleinheit (34) verdrehsicher mit dem Kopplungselement (25) des Kardangelenkes (3) gekoppelt ist.

5. Lasergerät nach einem der Ansprüche 2 bis 4, **dadurch gekennzeichnet, dass** die Hülse (32) an dem, der Feststelleinheit (34) abgewandten, Ende der verschiebbar ausgebildeten Achse (22) ein Feingewinde (35) aufweist.

6. Lasergerät nach Anspruch 6, **dadurch gekennzeichnet, dass** das Feingewinde (35) auf der der Strahleinrichtung (4) zugewandten Seite der Pendellaservorrichtung (2) angeordnet ist

7. Lasergerät nach einem der vorhergehenden Ansprüche, **dadurch gekennzeichnet, dass** das Kopplungselement des Kardangelenkes (3) als U-förmiges Halteprofil (25) ausgebildet ist.

## Claims

1. Laser device (1) with a pendulum laser device (2) consisting of a universal joint (3) with a first and second shaft (20, 22) and a radiation device (4) arranged on the universal joint (3), in which the radiation device (4) has a pendulum body (15), which is made selfleveling in a vertical direction (24) independently of an alignment of the laser device (1) by means of the universal joint (3), in which the first and second shafts (20, 22) of the universal joint (3) are arranged offset to each other in a vertical direction (24) and are connected by means of a coupling element (25),
**characterised in that** the pendulum body (15) of the radiation device (4) is mounted so that it may be displaced on at least one of the shafts (22) of the universal joint (3).

2. Laser device according to claim 1, **characterised in that** the shaft (22), on which the pendulum body is mounted so that it may be displaced, has a longitudinal shaft (30) and a sleeve (32), which are connected by means of a bearing unit (31).

3. Laser device according to claim 2, **characterised in that** the sleeve (32) engages with the pendulum body (15) of the radiation device (4) by means of a positive connection (33).

4. Laser device according to claims 2 to 3, **characterised in that** the longitudinal shaft (30) is connected to the coupling element (25) of the universal joint (3) so that it cannot turn by means of a locking unit (34).

5. Laser device according to one of claims 2 to 4, **characterised in that** the sleeve (32) has a fine thread (35) at the end of the shaft (22), which is made so that it may be displaced, turned away from the locking unit (34).

6. Laser device according to claim 6, **characterised in that** the fine thread (35) is arranged on the side of the pendulum laser device (2) turned towards the radiation device (4).

7. Laser device according to one of the previous claims, **characterised in that** the coupling element of the universal joint (3) is made as a U shaped holding profile (25).

## Revendications

1. Appareil laser (1) comprenant un dispositif laser oscillant (2) constitué d'un joint de cardan (3) doté d'un premier et d'un deuxième axes (20, 22) et d'un système de rayonnement (4) disposé au niveau du joint de cardan (3), sachant que le système de rayonnement (4) présente un corps oscillant (15), pourvu d'une mise à niveau automatique selon une direction verticale (24) au moyen du joint à cardan (3), indépendamment d'une orientation de l'appareil laser (1), sachant que le premier et le deuxième axes (20, 22) du joint de cardan (3) sont verticalement décalés l'un par rapport à l'autre (24) et sont couplés au moyen d'un élément de couplage (25),
**caractérisé en ce que** le corps oscillant (15) du système de rayonnement (4) est monté de manière à pouvoir être déplacé par coulissement sur au moins un des axes (22) du joint à cardan (3).

2. Appareil laser selon la revendication 1, **caractérisé en ce que** l'axe (22), sur lequel le corps oscillant est monté de manière à pouvoir être déplacé par coulissement, présente un axe longitudinal (30) et un manchon (32), qui sont couplés au moyen d'une unité de palier (31).

3. Appareil laser selon la revendication 2, **caractérisé en ce que** le manchon (32) est en prise avec le corps oscillant (15) du système de rayonnement (4) au moyen d'une liaison (33) par complémentarité de forme.

4. Appareil laser selon l'une quelconque des revendications 2 à 3, **caractérisé en ce que** l'axe longitudinal (30) est couplé à l'élément de couplage (25) du joint de cardan (3) de manière bloquée en rotation au moyen d'une unité d'immobilisation (34).

5. Appareil laser selon l'une quelconque des revendications 2 à 4, **caractérisé en ce que** le manchon (32) présente un filetage fin (35) au niveau de l'extrémité, opposée à l'unité d'immobilisation (34), de l'axe (22) réalisé de manière à pouvoir être déplacé par coulissement.

6. Appareil laser selon la revendication 6, **caractérisé en ce que** le filetage fin (35) est disposé sur le côté, tourné vers le système de rayonnement (4), du dispositif laser oscillant (2).

7. Appareil laser selon l'une quelconque des revendications précédentes, **caractérisé en ce que** l'élément de couplage du joint de cardan (3) est réalisé sous la forme d'un profilé de maintien (25) présentant une forme de U.
